Europäisches Patentamt

European Patent Office

Office européen des brevets

(19)

(11) Veröffentlichungsnummer: **0 179 017**

**A2**

(12) **EUROPÄISCHE PATENTANMELDUNG**

(21) Anmeldenummer: 85730133.7

(22) Anmeldetag: 27.09.85

(51) Int. Cl.⁴: **H02H 3/093**

(30) Priorität: 27.09.84 US 655152

(43) Veröffentlichungstag der Anmeldung:
23.04.86 Patentblatt 86/17

(84) Benannte Vertragsstaaten:
DE FR GB IT

(71) Anmelder: Siemens Aktiengesellschaft
Berlin und München Wittelsbacherplatz 2
D-8000 München 2(DE)

(72) Erfinder: Alexander, James O.
4941 Central Drive Apt.801
Stone Mountain, GA 30083(US)
Erfinder: King, William A.
5485 Shadowrock Drive
Lithonia, GA 30058(US)
Erfinder: May, William E.
539 Maplewood Drive
Lawrenceville, GA 30245(US)
Erfinder: Pardue, Von G.
2583 Landington Way
Duluth, GA 30136(US)

(54) Einen Mikroprozessor enthaltende Auslöseeinheit für einen Leistungsschalter.

(57) Es wird eine einen Mikroprozessor enthaltende Auslöseeinrichtung für einen Leistunsschalter (20) beschrieben. Die Momentanwerte der Ströme in jeder Phase (A, B, C) und in dem Neutralleiter (N) des zu schützenden Stromkreises werden gleichzeitig und aufeinanderfolgend Abtast- und Halteschaltungen (38) abgetastet. Die gemessenen Werte werden entsprechenden Analog/Digitalwandlern (39) zugeführt und die digitalisierten Werte werden aufeinanderfolgend einer Computereinrichtung (41) eingegeben. Diese berechnet echte Effektivwerte und Summen der Signale aller Phasen (A, B, C) und des Neutralleiters (N) zur Ermittlung eines Erdschlußstromes. Um die Benutzung eines 8-Bit-Mikroprozessors bei gleichzeitig hoher Auflösung des gemessenen Stromes über einen großen Meßbereich zu erzielen, ist eine automatische Änderung des Maßstabsfaktors der Strommessung vorgesehen. Eine Gedächtniseinrichtung für die thermische Vorgeschichte des Leistungsschalters wird durch Thermistoren oder durch eine kapazitive Schaltung, die in einem der Abkühlung des Leistungsschalters entsprechenden Maß enladen wird. Die Arbeitswicklung eines Auslösemagneten ist zur Erzielung einer kurzen Ansprechverzögerung in zwei unterschiedliche Wicklungsabschnitte unterteilt.

FIG 1

## Einen Mikroprozessor enthaltende Auslöseeinheit für einen Leistungsschalter

Die Erfindung betrifft eine einen Mikroprozessor enthaltende Auslöseeinheit für einen Leistungsschalter mit wenigstens einem an eine Leitung eines Wechselstromkreises angeschlossenen Stromwandler, wobei die Leitung mit einem entsprechenden Pol des Leistungsschalter verbunden ist; ferner mit einem elektromechanischen Auslösemechanismus zur Öffnung der Pole des Leistungsschalters und mit einem an die Stromwandler angeschlossenen Signalumformungsmittel zur Umwandlung des Ausgangsstromes des Stromwandlers in ein entsprechendes Spannungssignal.

Eine Auslöseeinheit dieser Art ist z. B. durch die US-A-4423449 bekannt geworden. Eine Schwierigkeit bei solchen Auslöseeinheiten besteht darin, daß sie keine echten Effektivwerte der Ströme verarbeiten und zusätzliche Schaltungsteile und Wandler benötigen, um einen Erdschluß zu erfassen und auswerten. Ferner ist die Meßgenauigkeit der bekannten Auslöseeinheiten über den gesamten Strombereich begrenzt und sie berücksichtigen nicht die thermische Vorgeschichte des Leistungsschalters.

Zur Stromerfassung wird bei den bekannten Auslöseeinheiten in jeder Phase und in dem Neutralleiter, sofern ein solcher vorhanden ist, ein Stromwandler benutzt. Die Ausgangsgrößen der Stromwandler werden jeweils einem Brückengleichrichter zur Vollweggleichrichtung zugeführt. Die gleichgerichteten Ausgangsgrößen jeder Leitung des Netzes werden dann gefiltert und einem Schaltungsteil zur Pegelerfassung zugeführt. Die Werte werden dann mit dem Faktor 0,707 multipliziert, um den Effektivwert zu ermitteln. Dann wird ein dem gemessenen Effektivwert entsprechendes Signal einem Zeitkreis eingegeben, der die Auslösung des Schalters veranlaßt, wenn der gemessene Strom während eine vorgegebenen Zeit besteht.

Die beschriebene Art der Effektivwertermittlung führt nur dann zu genauen Werten, wenn die Kurvenform des Stromes der Sinusform entspricht. Für nicht sinusförmige Ströme ist nämlich der angewandte Multiplikator falsch. In der Praxis ist es jedoch nicht ungewöhnlich, daß die Stromkreise erheblich verzerrte Ströme führen wie dies bei Schaltungen mit erheblicher Leitungskapazität der Fall ist, z. B. Inverterantriebe. Ferner enthalten Stromkreise mit Transformatoren eine dritte harmonische Teilschwingung, wodurch die Stromkurve ebenfalls von der Sinusform abweicht. Diese und weitere Ursachen von verzerrten Stromkurven sind die Ursache dafür, daß ein Leistungsschalter entweder unnötig bei einem zu niedrigen Strom oder unter Gefährdung des Leistungsschalters selbst oder von Anlageteilen erst bei einem zu hohen Strom auslöst.

Schaltungen zur Korrektur der beschriebenen Ungenauigkeiten der Effektivwertmessung sind bekannt. Z. B. kann die Ausgangsgröße eines Stromwandlers zur Speisung eines Widerstandes benutzt werden, dessen Temperatur zur Gewinnung des Effektivwertes gemessen werden kann. Eine solche Anordnung ist aufwendig und spricht darüberhinaus zu langsam auf Änderungen des Stromes an, um sich für elektronische Auslöseeinheiten einsetzen zu lassen.

Darüberhinaus gibt es handelsübliche integrierte Halbleiterschaltungen, die den wahren Effektivwert berechnen. Solche integrierte Schaltungen sind jedoch zur Verwendung in Auslöseeinheiten für Leistungsschalter zu teuer.

Ferner gibt es Abtastverfahren, bei denen der Augenblickswert eines Kurvenzuges periodisch gemessen wird. Wird eine ausreichende Anzahl von Abtastungen in jeder Periode vorgenommen und werden die Abtastwerte quadriert, werden ferner die Quadrate summiert und die Wurzel aus der Summe gezogen, so läßt sich der Effektivwert messen, wobei die Genauigkeit mit der Anzahl der Abtastwerte zunimmt. Die wirksame Anzahl von Abtastungen kann durch eine Phasenverschiebung des Beginns des Meßpunktes jeder Abtastung in aufeinander folgenden Halbwellen vergrößert werden. Eine asynchrone Abtastung dieser Art läßt sich zur Gewinnung von Effektivwerten beliebiger Kurvenformen einsetzen. Wird diese Technik jedoch auf elektronische Auslöseeinheiten angewandt, so werden die entsprechenden Schaltungen komplex und aufwendig, da die Messung getrennt für jede Phase und, falls vorhanden, den Neutralleiter, durchgeführt werden muß.

Ein weiteres Problem bei den bekannten Auslöseeinheiten besteht darin, daß sie Zwischenstromwandler für jede Phase und den Neutralleiter benötigen, um eine Erdschlußmessung durchführen zu können. Diese gesonderten, in Stern geschalteten Stromwandler stellen einen zusätzlichen Aufwand dar und beanspruchen einen beträchtlichen Raum innerhalb des Leistungsschalters oder der Schaltanlage.

Mit Rücksicht auf die erforderliche Meßgenauigkeit benötigen die bisher bekannten Auslöseeinheiten verhältnismäßig große Mikroprozessoren. Mit Rücksicht auf die Kosten ist es jedoch erwünscht, einen 8-Bit-Mikroprozessor einzusetzen. Will man aber Ströme von einem Viertel des Nennstromes (bei der Erdstromerfassung) bis zum Zehnfachen des Nennstromes erfassen, so beträgt der geforderte Meßbereich 1:40. Ist der Nennstrom z. B. 600 A so ist die Differenz zwischen de Zehnfachen des Nennstromes und einem Viertel des Nennstromes 5850 A. Da aber ein 8-Bit-Mikroprozessor 256 einzelne 8-Bit Kombinationen bereitstellt, betragen die einzelnen Schritte 6000/256 = 23,44 A. Dies führt zu einer Auflösung von 23,44 A/150 A = 16 %, wobei 150 A ein Viertel des Nennstromes von 600 A ist. Es wird jedoch eine Genauigkeit von etwa 5 % oder weniger gefordert. Deshalb kann ein einfacher 8-Bit-Mikroprozessor nicht eingesetzt werden, solange die Forderung sowohl nach einem großen Meßbereich als auch nach einer ausreichenden Auflösungsgenauigkeit besteht.

Die Wirkungsweise der bekannten Auslöseeinheiten ist auch insofern unbefriedigend, als bei der Berechnung der Auslösezeit die thermische Vorgeschichte des Leistungsschalters bei der Abschaltung verloren geht, so daß beim Wiedereinschalten des Leistungsschalters die vorhandene Erwärmung aufgrund der vorherigen Belastung nicht berücksichtigt wird.

Der Erfindung liegt die Aufgabe zugrunde, die beschriebenen Schwierigkeiten durch aufeinander aufbauende Maßnahmen zu beheben. Hierzu ist gemäß der Erfindung zunächst eine Abtast-und Halteschaltung zur wiederholten Abtastung und Haltung analoger Werte des Spannungssignales für eine vorbestimmte Anzahl von Abtastungen vorgesehen; an die Abtast- und Halteschaltung sind Mittel zur Analog/Digitalumwandlung zur Umwandlung des in der Abtast- und Halteschaltung erzeugten Analogwertes nach Durchführung der vorbestimmten Anzahl von Abtastungen in einen entsprechenden Digitalwert vorgesehen; mit dem Mittel zur Analog/Digitalumwandlung ist eine Mikrocomputereinrichtung zur Berechnung eines wahren Effektivwertes des Stromes auf der Leitung verbunden und zwischen die Mikrocomputereinrichtung und den Auslösemechanismus ist eine Ausgangsschaltung zur Betätigung des Auslösemechanismus aufgrund eines zuvor festgelegten Wertes des Leitungsstromes geschaltet. Auf diese Weise werden die bisherigen Ungenauigkeiten bei der Berechnung der Auslösezeit beseitigt, die durch die ungenaue Berechnung der Effektivwerte bedingt war. Es empfiehlt sich hierbei, die Abtastzeit kurz im Vergleich zur Zeitdauer einer Periode des Wechselstromes zu wählen, wobei ein Meßzyklus für einen Effektivwert eines Stromes etwa 1000 Abtastungen im Abstand von etwa 1500 ms während etwa 100 Perioden des Stromes umfassen kann.

Bei einem mehrphasigen Wechselstromnetz kann für jeden Leiter ein Stromwandler sowie eine Abtast- und Halteschaltung vorgesehen sein, wobei die von jedem Leiter abgeleiteten Spannungssignale gleichzeitig abgetastet werden. Auf diese Weise kann auch ein Erdschlußstrom richtig ermittelt werden. Die bisherigen Zwischenwandler werden nicht mehr benötigt.

Zur Durchführung der gleichzeitigen Abtastung können elektronische Schalter und Kondensatoren sowie Steuerungsmittel zur Abtastung der Leitungen vorgesehen sein, welche die Schalterstromkreise für jede der Leitungen gleichzeitig schließen und den zugehörigen Kondensatoren eine Ladung hinzufügen mit einem Wert, der der Amplitude des Spannungssignals im Augenblick der Abtastung entspricht. Die Steuerungsmittel veranlassen dabei die Abtastung der Ausgangswerte der Stromwandler mit der angegebenen Häufigkeit, insbesondere etwa elfmal in jeder Periode eines 60-Hz-Netzes. Als elektronischer Schalter eignet sich insbesondere ein Vierfach-Abtastschalter, der vier gesondert ansteuerbare Schaltelemente zur Abtastung von vier Spannungen aufweist.

Weist das zu überwachende Netz einen Neutralleiter auf, so wird der in dem Neutralleiter fließende Strom vorzugsweise in der gleichen Weise der Erfasung, Umformung und Abtastung wie die Ströme in den Phasenleitern unterworfen und die Mikrocomputereinrichtung weist entsprechende Mittel zur Berechnung eines Erdschlußstromes aus den gleichzeitigen Abtastwerden der Ströme in allen Leitern des Netzes auf.

Die bisherigen Beschränkungen der elektronischen Auslöseeinheiten auf einen beschränkten Strombereich können nach einem weiteren Merkmal der Erfindung dadurch beseitigt werden, daß an die Mikrocomputereinrichtung eine Schaltung zur selbsttätigen Änderung des Maßstabsfaktors angeschlossen ist, um einen gegebenen Strombereich bezogen auf Einheiten von Ampere pro Bit des Mikrocomputers in einene ersten kleinen und einen zweiten größeren Bereich zu unterteilen. Dabei kann der Maßstabsfaktor beispielsweise bei Strömen oberhalb des 1,5fachen Nennstromes dynamisch geschaltet werden um jeweils die selbe Mindestgenauigkeit zu erreichen. Als Nennstrom sei z. B. 600 A angenommen, so daß bis zu 900 A 900/256 = 2,52 A pro Bit entfallen. Für einen Erdschlußfehler mit einem Viertel des Nennstromes (150 A) beträgt die Auflösung 3,5/150 = 2,3 %. Dies ergibt eine sehr befriedigende Auflösung von +/- 1,2 %.

Bei Strömen oberhalb von 900 A wird der Maßstabsfaktor dynamisch umgeschaltet, so daß für einen Strom vom Zehnfachen des Nennstromes 6000/256 A je Bit vorliegen, was die selbe Genauigkeit ergibt.

Zur Durchführung der dynamischen Umschaltung kann nach einer Weiterbildung der Erfindung eine zwischen wenigstens zwei Werten umschaltbare Referenzspannung erzeugt werden, um dadurch die selbsttätige Änderung des Maßstabsfaktors zu bewirken. Hierzu kann ein erster Operationsverstärker mit einem Eingang für ein variables Spannungssignal und einem Ausgang sowie ein zweiter Operationsverstärker mit einem Festspannungseingang und einem mit dem Ausgang des ersten Verstärkers verbunden Ausgang vorgesehen sein derart, daß sich die Spannung am Verbindungspunkt der Ausgänge aufgrund des variablen Spannungssignals ändert. Dabei ist es zweckmäßig, an den Eingang des zweiten Verstärkers ein Spannungsteilernetzwerk anzuschließen, daß dem zweiten Verstärker eine zuvor gewählte Spannung zuführt. Das Spannungsteilerneztwerk kann dabei die Versorgungsspannung auf etwa 0,556 V verringern. Diese Spannung steht dann auch als Ausgangsspannung an der zweiten Diode zur Verfügung.

Ferner kann auch an den Eingang des ersten Verstärkers ein Spannungsteilernetzwerk angeschlossen sein, das eine variable Spannung erhält und diese Spannung teilt. Es erweist sich als günstig, das Netzwerk so zu bemessen, daß die Eingangsspannung etwa 3,5 V beträgt, wenn die variable Spannung etwa 5 V beträgt. Wird die Beschaltung des ersten und des zweiten Verstärkers in der vorgenannten Weise vorgenommen, so erhält man am Verbindungspunkt der Ausgänge der beiden Verstärker eine Ausgangsspannung von 3,5 V bei einem variablen Spannungssignal von 5 V und etwa 0,556 V bei einem variablen Spannungssignal von 0 V.

Wie bereits erwähnt, besteht ein Mangel der bisher bekannten elektronischen Auslöseeinheiten, die einen Mikroprozessor enthalten, darin, daß die thermische Vorgeschichte des Leistungsschalters bei seiner Wiedereinschaltung nach der Auslösung aufgrund eines Fehlers nicht berücksichtigt wird.

Nach einer Weiterbildung der Erfindung weist der Leistungsschalter eine als thermisches Gedächtnis wirkende Einrichtung auf, die eine zu der in einem gegebenen Zeitpunkt in dem Leistungsschalter vorhandenen thermischen Energie in Beziehung stehende Ausgangsgröße erzeugt, und es sind Schaltungsteile zur Zuführung der Ausgangsgröße der thermischen Gedächtniseinrichtung nach Umwandlung in einen digitalen Wert mittels der Mittel zur Analog/Digitalumwandlung zu der Mikrocomputereinrichtung vorgesehen, um die Auslösefunktion der Auslöseeinheit nach dem Schließen des Leistungsschalters nach Maßgabe der thermischen Vorgeschichte zu beeinflussen. Als thermisches Gedächtnis wirkende Einrichtung können ins besondere an einer Stromschiene jedes Poles des Leistungsschalters angebrachte Thermistoren dienen. Hierbei handelt es sich um Widerstände, die ihren Widerstandswert in Abhängigkeit von der Temperatur ändern. Insbesondere können solche Thermistoren an den als Primärwicklungen der Stromwandler dienenden Leitern befestigt sein. Vorteilhaft sind Thermistoren mit einem Temperaturkoeffizienten derart, daß ihr Widerstand in Beziehung zu der in dem Leistungsschalter vorhandenen thermischen Energie steht.

Als thermische Gedächtniseinrichtung eignet sich aber auch eine kapazitive Speichereinrichtung, in der ein Kondensator auf eine dem Energieumsatz innerhalb des Leistungsschalters entsprechenden Ladungswert aufladbar ist. In diesem Zusammenhang kann innerhalb der Mittel zur Analog/Digitalumwandlung ein Kanal zur Umwandlung der Ladungswertes des Kondensators in einen Digitalwert vorgesehen sein, und dieser Digitalwert kann der Mikrocomputereinrichtung zur Beeinflussung des auslöseverhaltens zuführbar sein. Der Einfluß der natürlichen Abkühlung des Leistungsschalters läßt sich auf einfache Weise durch Schaltungsmittel zur Entladung des Kondensators nach der Abschaltung oder Auslösung des Leistungsschalters nachbilden.

Aufgrund der Umschaltung des Maßstabsfaktors bei der Strommessung ist die Auslöseeinheit nach der Erfindung für einen größeren Strombereich als bisher übliche Auslöseeinheiten geeignet. Es wäre daher erwünscht, im Bereich sehr hoher Fehlerströme eine besonders rasche Auslösung des Leistungsschalters zu bewirken, da sonst die Selektivität der Schalter in einem Netz gestört sein kann. Eine solche hohe Ansprechgeschwindigkeit ist nach einer Weiterbildung der Erfindung dadurch zu erzielen, daß der Auslösemechanismus eine elektromagnetische Verklinkungseinrichtung mit einer Arbeitswicklung und einem Halbleiterschalter mit einer Steuerelektrode umfaßt, wobei die Auslösewicklung mit dem Halbleiterschalter in Reihe geschaltet ist und der Steuerelektrode aufgrund einer Ausgangsgröße der Mikrocomputereinrichtung ein Steuersignal zur Leitenschaltung des Halbleiterschalters zuführbar ist und wobei ferner die Auslösewicklung aus einem Abschnitt mit hoher Windungszahl und hohem Widerstand und einem Abschnitt mit niederiger Windungszahl und niedrigem Widerstand besteht und zwischen den Verbindungspunkt der in Reihe geschalteten Wicklungsabschnitte und den Halbleiterschalter ein Nebenschlußschalter zur Überbrückung des Wicklungsabschnittes mit hoher Windungszahl beim Anliegen einer einen festgelegten Wert überschreitenden Spannung vorgesehen ist. Auf diese ist eine Auflösung innerhalb drei bis vier Millisekunden erzielbar.

Eine Auslöseeinheit nach der Erfindung kann an einem Leistungsschalter oder innerhalb seines Gehäuses untergebracht sein. Stattdessen kann die Auslöseeinheit auch entfernt von dem Leistungsschalter angeordnet sein. Z. B. kann bei einer Schaltanlage mit mehreren Leistungsschaltern ein Anlagenteil für die zusammengefaßte Unterbringung der Auslöseeinheiten der Leistungsschalter bereitgestellt sein. Die Auslöseeinheiten sind dann mit ihren zugehörigen Leistungsschaltern über Leitungen verbunden. Bei einer solchen Anordnung können die gemeinsam untergebrachten Auslöseeinheiten gewisse Schaltungsteile gemeinsam aufweisen, beispielsweise ihre Stromversorgung, die Datenaufbereitung und ähnliche Teile.

## Kurze Beschreibung der Zeichnungen

Die Figur 1 ist ein Blockschaltbild der neuen Auslöseeinheit mit einem Mikroprozessor nach der vorliegenden Erfindung.

Die Figuren 2A und 2B sind ein zusammengehörendes Flußdiagramm für den Mikroprozessor des Blockschaltbildes nach Figur 1.

Die Figuren 3A, 3B, 3 C und 3D sind Teile eines zusammengehörenden schematischen Schaltbildes der Schaltung einer Auslöseeinheit.

## Ausführliche Beschreibung der Erfindung

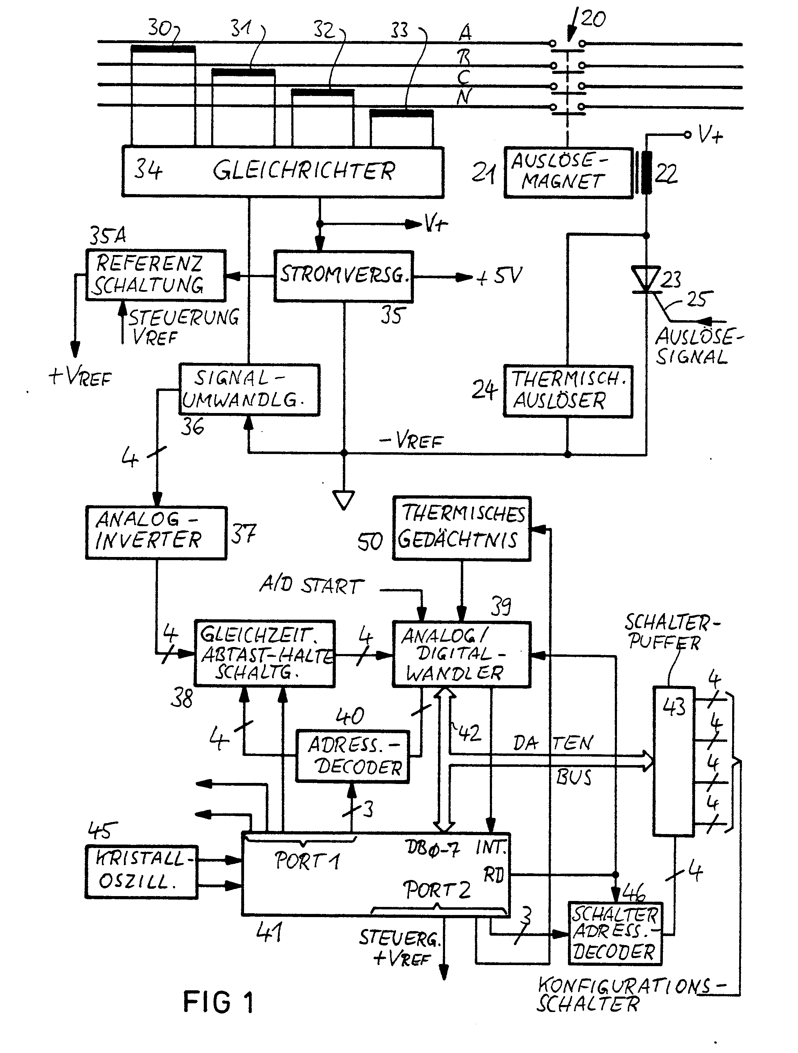

In der Figur 1 ist zunächst schematisch eine dreiphasige Wechselstrom-Energieleitung mit den Phasen A, B und C und einem Neutralleiter N gezeigt, der wahlweise vorhanden sein kann. Der schematisch gezeigte Leistungsschalter 20 besitzt vier Pole für die Phasen A, B und C und den Neutralleiter N. Der Leistungsschalter kann ein üblicher Leistungsschalter für eine relativ niedrige Betriebsspannung mit einem Nennstrom von z. B. 600 A sein. Es ist jedoch selbstverständlich, der der Leistungsschalter jeden gewünschten Nennstrom besitzen kann. Der Leistungsschalter 20 kann in einer metallgekapselten Schaltanlage zusammen mit jeder gewünschten Anzahl weiterer Leistungsschalter mit gleicher oder anderer Bemessung untergebracht sein.

Der Leistungsschalter 20 enthält einen Auslösemechanismus 21, der von der üblichen Bauart eines elektromagnetischen Auslösemechanismus sein kann, der mittels eines durch die Auslösewicklung 22 fließenden Stromes betätigbar ist. Die Auslösewicklung 22 liegt am Pluspol einer Gleichrichteranordnung 34 und wird aufgrund der Zündung eines in Reihe mit der Auslösewicklung 22 liegenden Thyristors 23 von Strom durchflossen. Die Auslösewicklung 22 kann in zwei Wicklungsabschnitte aufgeteilt sein, wie später beschrieben wird. Eine thermische Auslöseschaltung 24 kann gleichfalls vorgesehen sein, um eine Auslösung unabhängig von dem Thyristor 23 zu bewirken, wenn die Temperatur des Leistungsschalters 20 einen vorgewählten Wert, z. B. 85 °C, überschreitet.

Zweck der vorliegenden Erfindung ist die Zufuhr eines Auslösesignals zu der Steuerelektrode 25 des Thyristors 23 unter bestimmten Bedingungen, die in dem durch den Leistungsschalter 20 zu schützenden Stromkreis bestehen.

In den Phasenleitern A, B, C und dem Neutralleiter sind übliche Stromwandler 30, 31, 32 und 33 vorgesehen. Die Ausgangsgrößen dieser Wandler werden einer geeigneten Gleichrichteranordnung 34 zugeführt, die in üblicher Weise aus entsprechenden Einzelphasen-Vollwellengleichrichtern in Brückenschaltung für jeden der Wandler 30 bis 33 besteht. Diese Anordnung wird später ausführlicher beschrieben. Die Ausgangsgröße der Gleichrichteranordnung 34 wird einer Stromversorgungseinrichtung 35 zugeführt, die eine 5-Volt Steuerspannung zum Betrieb der Bauteile des Auslösemechanismus wie auch der Bauteile einer logischen Schaltung erzeugt, wie später beschrieben wird. Die Stromversorgungseinrichtung 35 erzeugt ferner eine positive Spannung von 12 V für eine Referenzschaltung 35a, die eine Umschaltung einer Referenzspannung VRef zwischen wenigstens zwei Werten, z. B. 3, 5V und 0,56 V bewirkt, wobei diese Spannungen dem Eingang +VRef eines Analog/Digitalwandlers eingegeben werden, der noch beschrieben wird. Zweck der Umschaltung der Referenzspannung VRef ist eine selbsttätige Änderung des Maßstabsfaktors, wie später beschrieben wird. Die Umschaltung kann z. B. bei einem gemessenen Strom vom 1,5fachen des Nennstromes des Leistungsschalters 20 erfolgen. Die Umschaltung des Referenzpegels bewirkt eine automatische Änderung des Strom-Maßstabes, so daß eine relativ gute Meßgenauigkeit bei niedrigen Strömen erzielt wird, was die Verwendung eines 8-Bit-Mikroprozessors bei der geforderten Genauigkeit der Strommessung bei kritischen Strompegeln erlaubt.

Die Ausgangsgrößem der Gleichrichteranordnung 34 werden auch über Signalwandlerschaltungen 36 geführt, welche die Ausgangsstromsignale der Gleichrichteranordnung 34 einzeln auf entsprechende Spannungspegel umwandelt. Die Ausgangswerte der Signalwandlerschaltungen 36 werden dann dem Analoginverter 37 zugeführt, der ihre Polarität von negativ auf positiv invertiert.

Jedes der von den Leitern A, B, C und N abgeleiteten Signale wird dann einer gleichzeitig wirkenden Abtast- und Halteschaltung 38 (Sample-and-Hold) zugeführt. Die Abtast- und Halteschaltung 38 greift gleichzeitig einen Abtastwert von jedem der Ausgänge der Stromandler 30 bis 33 alle 1500 ms oder elfmal in jeder Vollwelle in einem 60-Hz-Netz ab.

Bei jeder der gleichzeitigen Abtastungen laden die von den Leitern A, B, C und N entnommenen Signale einen entsprechenden Kondensator auf einen dem Augenblickswert entsprechenden Spannungspegel auf. Die Ladung jedes Kondensators wird dann aufeinanderfolgend abgetastet und mittels des Analog/Digitalwandlers 39 in einen Digitalwert umgewandelt, der dem Augenblicksstrom des betreffenden Leiters entspricht und der dann dem Mikrocomputer 41 eingegeben wird. Die Adressier- und Decodierschaltung 40 koordiniert diese Vorgänge, die durch den Mikrocomputer 41 gesteuert wird. Etwa alle 100 Vollwellen wird der Effektivwert des Stromes aus den Abtastwerten arithmetisch berechnet.

Ein Datenbus 42 verbindet den Mikrocomputer 41 mit dem A/D-Wandler 39 und Schalter-Pufferschaltungen 43, die ihrerseits mit vier entsprechenden Konfigurationsschaltern für die Einstellgrößen: Nennstrom, unverzögerte Auslösung, Erdschlußstrom und die Erdschluß-Auslöseverzögerung verbunden sind. Jede gewünschte Anzahl von Konfigurationsschaltern kann benutzt werden, für jeden gewünschten Parameter. Diese Schalter sind BCD-Schalter, die außerhalb der Steuerschaltung angeordnet sind, so daß sie leicht von Hand betätigt werden können. Gemäß der Figur 1 ist ferner ein Kristalloszillator 45 und eine Schalteradressier/Decodier schaltung 46 vorgesehen, die zwischen den Mikrocomputer 41 und die Pufferschaltungen 43 geschaltet ist.

In Figur 1 ist ferner eine thermische Gedächtnisanordnung 50 vorgesehen, bei der es sich um eine Thermistorschaltung oder eine kapazitive Schaltung handeln kann. Wird eine kapazitive Schaltung benutzt, die unmittelbar vor der Auslösung durch den Mikrocomputer 41 auf einen dem thermischen Zustand des Leistungsschalters entsprechenden Wert aufgeladen wird, so ist eine Entladeschaltung in dem thermischen Gedächtnis 50 vorgesehen, damit sich die kapazitive oder sonstige Anordnung innerhalb des thermischen Gedächtnisses 50 entlädt oder in einem entsprechenden Maß abkühlt, wenn der Leistungsschalter geöffnet ist und seine Teile abkühlen. Wird der Leistungsschalter wieder eingeschaltet, wird der in dem thermischen Gedächtnis 50 verbleibende Wert dem System wieder eingelesen und alle Auslösepegel werden entsprechend eingestellt, um die thermische Vorgeschichte des Leistungsschalters zu berücksichtigen. Werden Thermistoren als thermisches Gedächtnis benutzt, so sind dies vorzugsweise Bauelemente mit einem negativen Temperaturkoeffizienten, die auf den Hauptleitern innerhalb des Leistungsschalters montiert sind und durch den Mikroprozessor in der beschriebenen Weise gelesen werden.

Zu den Ausgangsgrößen im Ausgangsbereich (Port) 2 des Mikrocomputers 41 gehört eine Steuergröße für +VRef, welche der Referenzschaltung 35a zugeführt wird, um den Pegel +VRef einzustellen und die gewünschte selbsttätige Änderung des Referenzausgangs zu erzielen.

Von dem Ausgangsbereich (Port) 1 des Mikrocomputers 41 wird ein Auslösesignal abgeleitet, bei dem es sich um das dem Thyristor 23 unter den entsprechenden berechneten Umständen zuzuführende Auslösesignal handelt. Ferner wird ein A/D-Start signal von dem Mikrocomputer 41 abgenommen, welches dem A/D-Wandler 39 zugeführt wird, um Abtastwerte von den gleichzeitig arbeitenden Abtast- und Halteschaltungen abzurufen.

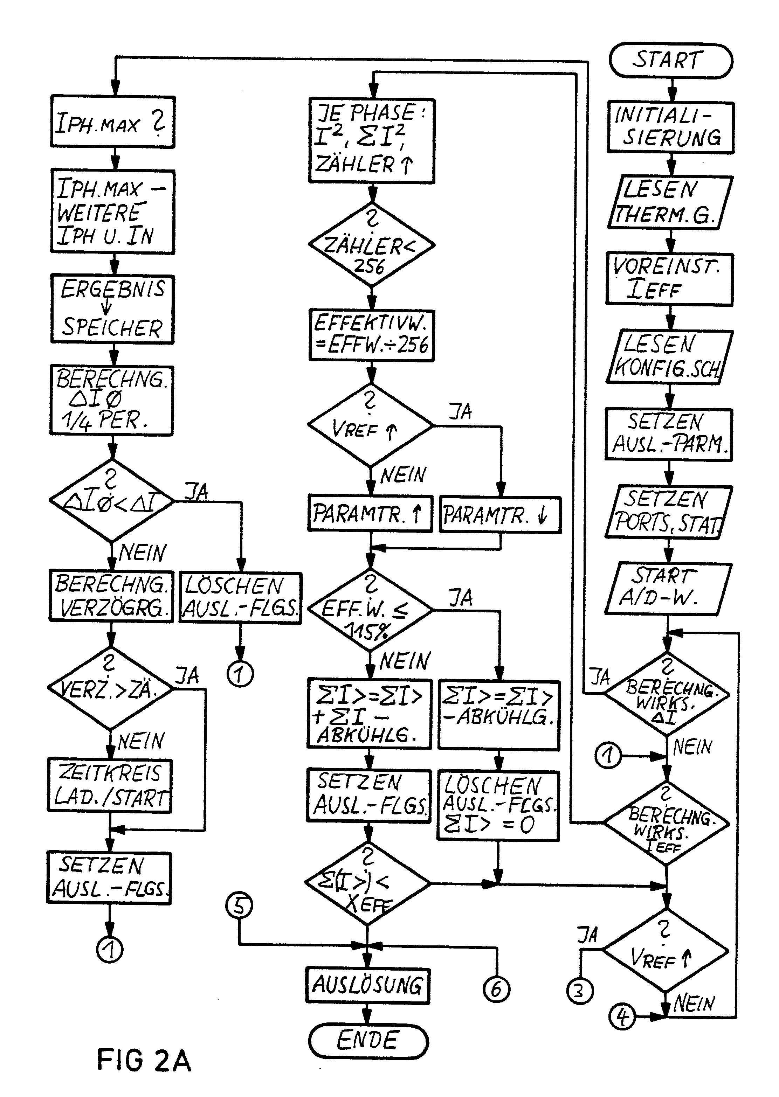

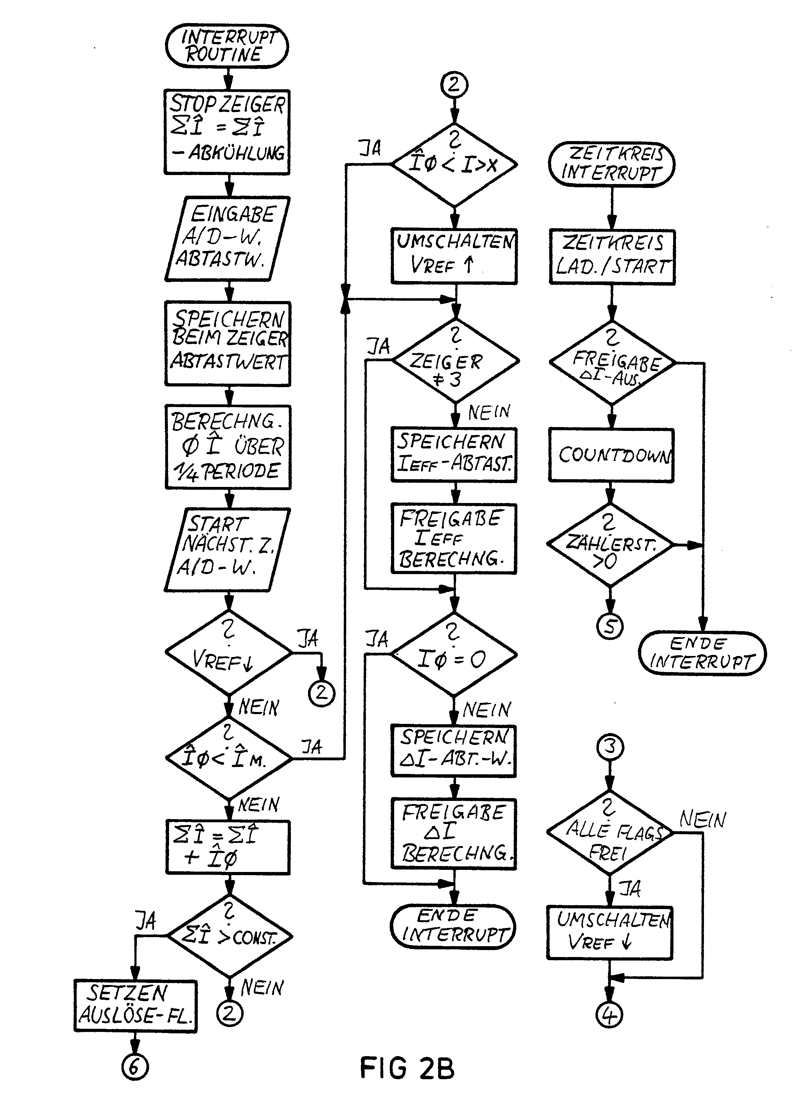

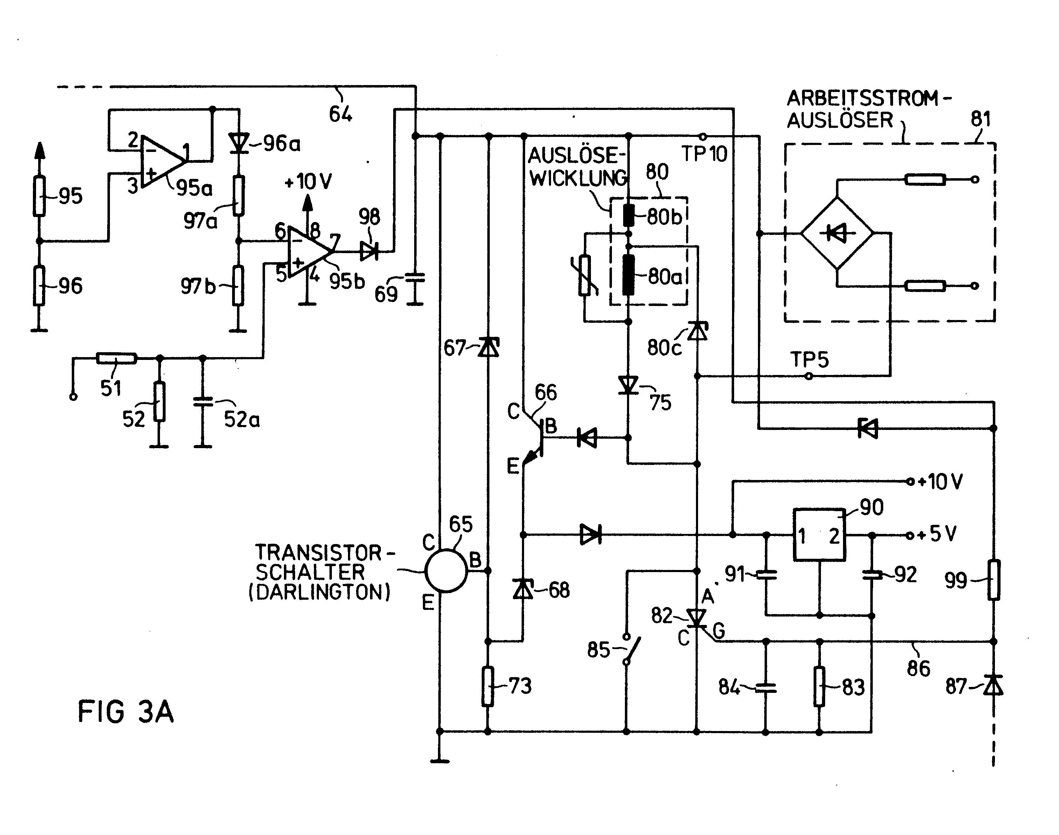

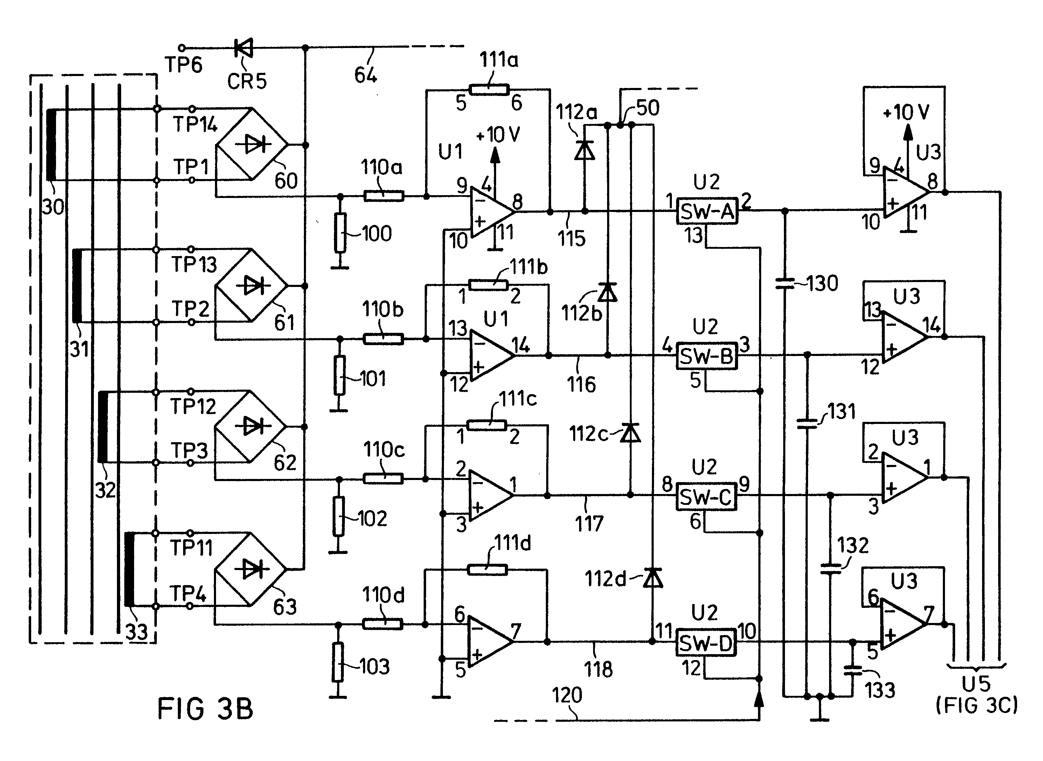

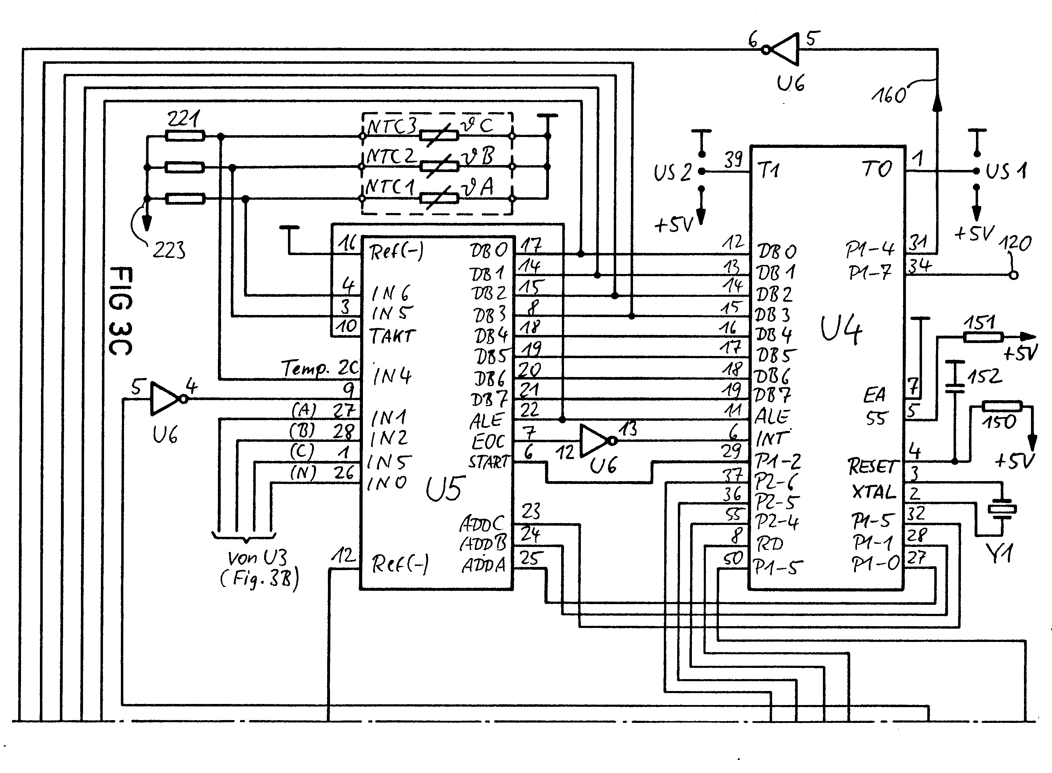

Die Figuren 2A und 2B zeigen ein Flußdiagramm für den Mikrocomputer gemäß der Figur 1. Dasselbe Flußdiagramm ist auf die Schaltung gemäß den Figuren 3a, 3b und 3c anwendbar, wie später beschrieben wird.

Zum Verständnis des Flußdiagramms beginnt man bei der Betrachtung am besten mit dem Start in der Figur 2A, rechts oben. Anschließend an den Start wird das System initialisiert, wozu insbesondere die Initialisierung des Zeitspeichers, der Eingangs-Ausgangs-Bereiche und der Unterbrechungs-Routinen (Interrupts) gehört. Anschließend werden die Werte des Thermistors in dem thermischen Gedächtnis 50 gelesen und die Effektivwert-Auslöseströme werden in Übereinstimmung mit der thermischen Vorgeschichte des Schalters entsprechend den Thermistorwerten voreingestellt. Die an die Schalterpuffer 43 angeschlossenen Konfigurationsschalter werden dann gelesen und die

Auslöseparameter werden dementsprechend gesetzt. Anschließend werden die Eingangs-Ausgangsbereiche (Ports) und der Status gesetzt und der A/D-Wandler 39 wird gestartet.

Dann wird eine Messung durchgeführt, ob der Erdschlußkreis freigegeben ist. Falls nicht, wird eine Entscheidung getroffen, ob die Anweisung zur Effektivwertberechnung freigegeben ist (enable). Fall nicht, wird eine Entscheidung getroffen, ob die Referenzspannung auf ihrem hohen Pegel ist. Falls nicht, kehrt eine Subroutine zur Entscheidung über die Freigabe des Erdschlußkreises zurück.

Hat die vorhergehende Sequenz ergeben, daß der Erdschlußkreis freigegeben war, schreitet das Flußdiagramm zur ersten Säule links in Figur 2A weiter und es wird der größte Phasenstrom bestimmt. Von diesem wird der in den anderen Phasen und dem Neutralleiter fließende Strom subtrahiert und das Ergebnis wird gespeichert. Dieser Vorgang bildet einen Abtastwert des Erdschlußstromes. Anschließend wird eine Berechnung der Durchschnittswerte des Erdschlußstromes während einer Viertelperiode durchgeführt, und es wird eine Entscheidung getroffen, ob der Mittelwert des Erdschlußstromes geringer als der Augenblickswert des Erdschlusses ist.

Falls der Mittelwert des Erdschlusses geringer als der Augenblickswert des Erdschlusses ist, werden die anfangs angezeigten Kennzeichnungsbits für Auslösung (trip flags) gelöscht, so daß die Schaltung ihre Tätigkeits in einer noch zu beschreibenden Weise fortsetzen kann. Falls jedoch der Erdschlußmittelwert nicht geringer als der Augenblickswert des Erdschlusses ist, wird die Verzögerung berechnet und es wird eine Entscheidung getroffen, ob die Verzögerung größer als die im Zähler stehende Verzögerung ist. Trifft dies zu, werden die Kennzeichnungsbits für die Auslösung (trip flags) sofort gesetzt. Falls nicht, wird der Wert dem Zeitkreis eingegeben und der Zeitkreis wird gestartet, so daß die Kennzeichnungsbits für Auslösung nach einer gegebenen Zeitdauer gesetzt werden.

Bei nochmaliger Betrachtung der rechten Säule in Figur 2A wird ersichtlich, daß anschließend an den Start eine Ausgangsgräße an Nr. 3 angelegt wird, falls sich herausstellt, daß die Referenzspannung hoch ist. Diese Ausgangsgröße findet sich am untersten Ende der rechten Säule in Figur 2A und man erkennt in Figur 2B, rechts unten, daß eine Entscheidung getroffen wird, ob alle Kennzeichnungsbits gelöscht sind. Trifft dies zu, dann kann auf die niedrige Referenzspannung umgeschaltet werden. Falls nicht, wird eine Ausgangsgröße 4 erzeugt, die zur rechten Säule in Figur 2A gelangt.

Ausgehend von der Stelle in der rechten Säule des Flußdiagramms gemäß der Figur 2A, wo die Entscheidung getroffen wird, ob die Effektivwertberechnung freigegeben ist, geht das Flußdiagramm zur mittleren Säule in der Figur 2A über, falls die Berechnung freigegeben ist. Der Mikroprozessor quadriert dann für jede Phase den gemessenen Abtastwert, addiert ihn zu der Summe und erhöht den Zählerstand. Dann wird eine Entscheidung getroffen, ob der Zählerstand geringer als 256 ist. Falls nicht, wird eine Effektivwertberechnung durchgeführt, in welcher der Effektivwert durch 256 geteilt wird. Es wird dann ermittelt, ob die Referenzspannung hoch ist und falls dies zutrifft, werden die entsprechenden Parameter benutzt und falls nicht, werden die Parameter der niedrigen Referenzspannung eingesetzt.

Anschließend wird eine Entscheidung getroffen, ob der gemessene Effektivwert geringer oder gleich als z. B. 115 % oder 150 % des Nennstromes ist. Falls nicht, wird die Überstromsumme gleich der Überstromsumme plus dem Effektivwert minus dem Abkühlungsfaktor gemacht und die Kennzeichnungsbits (flags) für Auslösung werden gesetzt.

Eine Entscheidung wird dann herbeigeführt, ob die Überstromsumme geringer als die Summe des durchschnittlichen Effektivwertes ist. Falls nicht, wird der Schalter ausgelöst und die Sequenz wird beendet. Falls der Effektivwert geringer oder gleich als 115 % des Nennstromes ist, wird ermittelt, ob die Überstromsumme der Überstromsumme minus dem Abkühlungsfaktor entspricht.

Anschließend werden die Kennzeichnungsbits für Auslösung gelöscht, wenn die Überstromsumme gleich 0 ist. In diesem Zustand, oder falls die Überstromsumme geringer als einer der Effektivströme ist, wird eine Ausgangsgröße an die rechte Säule des Flußdiagramms in Figur 2A abgegeben, wo eine Entscheidung getroffen wird, ob die Referenzspannung hoch ist; das Flußdiagramm arbeitet dann in der beschriebenen Weise weiter.

Die Kennzeichnungsbits für Auslösung werden auch dann gesetzt, wenn der Leistungsschalter ausgelöst ist und die Sequenz beendet ist. Dieselben Kennzeichnungsbits für Auslösung können durch die Interruptroutine gemäß der linken Säule in Figur 2B gesetzt werden. In dieser Säule beginnt die Interruptroutine schrittweise einen Zeiger (pointer) von einer Spitzenwertsumme zu einer Spitzenwertsumme minus einen Abkühlungsfaktor zu setzen. Diese Größe wird dann dem Eingang des A/D-Wandlers zugeführt, der die angelieferten Augenblickswerte abtastet. Der Abtastwert wird dann bei dem Zeiger gespeichert und es wird eine Berechnung des Spitzendurchschnittes während einer Viertelperiode durchgeführt.

Anschließend wird der nächste Analog-Digitalumandlungszyklus gestartet und es wird eine Entscheidung getroffen, ob die Referenzspannung niedrig ist. Falls die Referenzspannung hoch ist, wird eine zweite Entscheidung herbeigeführt, ob der Spitzendurchschnittswert geringer als der Spitzenaugenblickswert ist. Falls nicht, wird eine Entscheidung getroffen, ob die Spitzensumme größer als ein bestimmter konstanter Wert ist. Trifft dies zu, werden die Kennzeichnungsbits für Auslösung gesetzt und der Schalter wird ausgelöst. Falls nicht, wird eine Routine gestartet, die sich an die in der linken Säule in Figur 2B gezeigte Routine anschließt. Die selbe Routine wird gestartet, falls die Referenzspannung niedrig ist.

In der in der mittleren Säule in Figur 2B gezeigten Routine wird entschieden, ob der Spitzendurchschnitt geringer als ein vorgegebener hoher Wert ist. Falls nicht, schaltet das System auf die höhere Referenzspannung um. Anschließend wird entschieden, ob der Zeiger ungleich 3 ist. Falls nicht, werden die abgetasteten Effektivwerte gespeichert und das freigegebene Kennzeichnungsbit für Effektivwertberechnung wird erhöht. Die nächste Entscheidung ergibt, ob die gemessene Stromsumme 0 ist. Falls nicht, liegt ein Erdschluß vor und die Erdschlußwerte werden gespeichert und das Kennzeichnungsbit für Erdschlußberechnung wird freigegeben. Dieser Vorgang beendet die Interruptsequenz.

Die in Figur 2B ganz rechts gezeigte Sequenz beginnt mit einem Interrupt des Zeitkreises, was eine Neuladung und Start des Zeitgebers in Lauf setzt. Anschließend wird ermittelt, ob das Erdschlußauslösesystem gelöscht ist. Trifft dies zu, endet die Interruptroutine. Falls sie nicht gelöscht ist, beginnt ein Countdown und es wird entschieden, ob der Zählerstand größer als 0 ist. Falls nicht, wird eine Ausgangsgröße an Nr. 5 angelegt zur mittleren Säule in Figur 2A, was die Auslösung des Schalters veranlaßt.

Bei der Durchführung der beschriebenen Vorgänge mit Hilfe des Mikrocomputers 41 ist das gewünschte Programm z. B. in einem bestimmten Mikroprozessor oder in einem EPROM oder ROM gespeichert. Auch die Schalterdaten und die Zeiten können in einem geeigneten ROM gespeichert sein. Im folgenden wird die ausführliche Schaltung nach der vorliegenden Erfindung gemäß den Figuren 3A, 3B und 3C beschrieben. Diese Figuren bilden gemeinsam ein Schaltbild, das zur besseren Übersichtlichkeit auf gesonderte Zeichnungsblättern verteilt ist. Die Verbindungsleitungen sind dementsprechend bezeichnet.

Der in Figur 1 gezeigte Gleichrichter 34 ist ausführlicher in der Figur 3B dargestellt und weist danach vier einzelne Vollwellen-Brückgleichrichter 60, 61, 62 und 63 auf. Diese Brücken erhalten Eingangsgrößen aus den Stromwandlern 30, 31, 32 und 33 für die Phasenleiter A, B, C und den Neutralleiter N. Die positive Ausgangsleitung 64 führt zu der Stromversorgungsschaltung gemäß der Figur 3A.

Die Figur 3A zeigt die Stromversorgungsschaltung und die schematisch dargestellte elektromagnetische Auslöseeinrichtung des Leistungsschalters. Die Stromversorgungsschaltung enthält einen Transistorschalter 65 in Darlingtonschaltung, z. B. mit Transistoren vom Typ 2N6533, die so geschaltet sind, daß eine eventuell in der Stromversorgung entstehende Überschußenergie abgeleitet wird. Ein weiterer Transistor 66, z. B. MPSA06, ist in Reihe mit Zenerdioden 67 und 68, z. B. vom Typ 1N5261B und 1N5240B geschaltet. Die Zenerdiode 67 begrenzt die Spannung auf der Leitung 64 auf 47 Volt, während die Zenerdiode 68 die Spannung auf 10 V begrenzt. Ferner ist ein Glättungskondensator 69 (1,5 μF) vorgesehen. Ein Widerstand 73 (z. B. 1 Kiloohm) verbindet die Anode der Zenerdiode 68 mit dem Nullpotential der Digitalschaltung.

An die positive Leitung 64 ist ferner die Haupttauslösewicklung 80 des Leistungsschalters und ein Arbeitsstromauslöser 81 verbunden. Die Wicklung 80 des Auslösemagneten ist in Reihe mit einer Diode 75 vom Typ 1N4004 und einem Thyristor 82 geschaltet, z. B. vom Typ C103B, der mit dem Nullpotential der Stromversorgungsschaltung verbunden ist. Der Steuerkreis des Thyristors 82 weist einen Widerstand 83 von z. B. 1 Kiloohm auf und einen Kondensator 84 von z. B. 0,1 μF. Parallel zu dem Thyristor 82 liegt ein Thermostat 85 z. B. vom Typ SCCRP85CS, der beim Erreichen einer Temperatur des Schalters von 85° schließt und dadurch eine Auslösung des Leistungsschalters unabhängig von dem Arbeiten des Thyristors 82 veranlaßt.

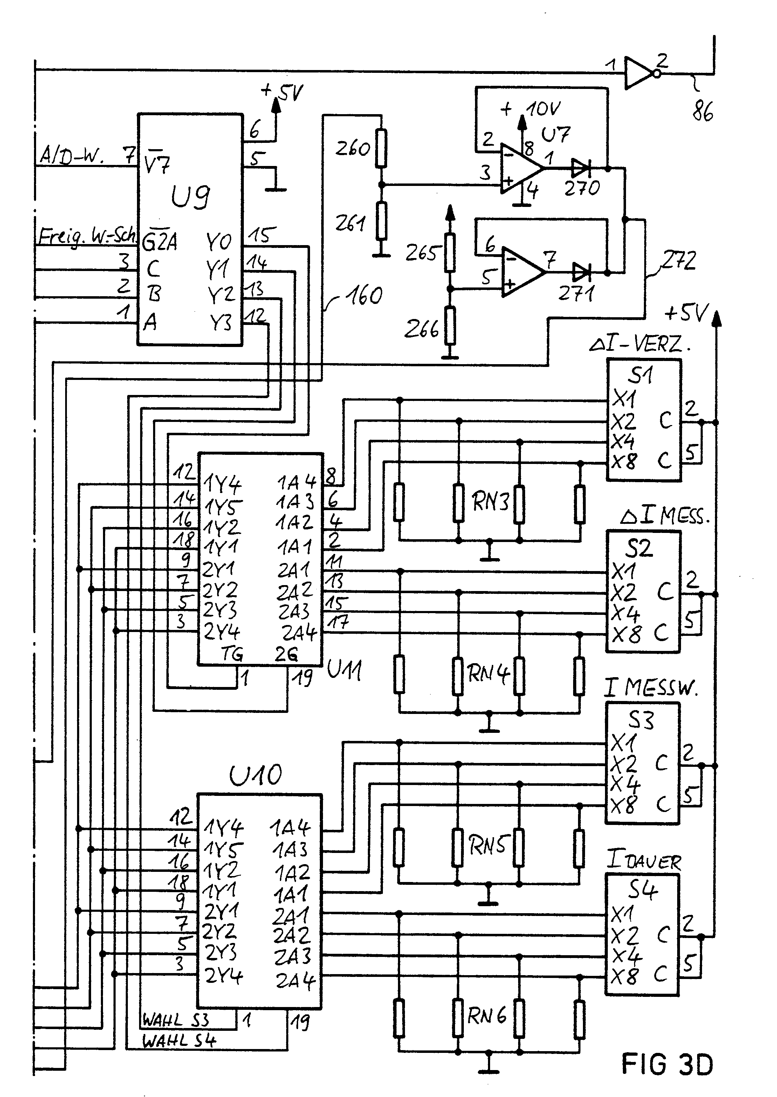

Ein Eingangsauslösesignal wird über eine Diode 87 (z. B. 1N4148) an die Steuerelektrode des Thyristors 82 über die Auslösesignalleitung 86 angelegt, die mit der Mikroprozessorsteuerung gemäß der Figur 3 in Verbindung steht, wie später beschrieben wird.

Die Wicklung 80 besteht aus einem Wicklungsabschnitt 80a mit 6650 Windungen mit Draht vom US-Drahtmaß 40 (0,08 mm) und einem Wicklungsabschnitt 80b mit 110 Windungen vom US-Drahtmaß 33 (0,18 mm). Die Widerstände der Wicklungsabschnitte 80a und 80b betragen 1150 Ohm und 4,4 Ohm. Die Wicklungsabschnitte sind im Reihe geschaltet; ihr Verbindungspunkt ist mit der Anode des Thyristors 82 über eine Zenerdiode 80c vom Typ 5A26A "Transzorb" der Firma General Semiconductor angeschlossen, die einen hohen Strom von z. B. 11 A zu führen vermag. Die Anwendung getrennter Wicklungsabschnitte 80a und 80b in Verbindung mit der Zenerdiode 80c gestattet eine Überbrückung des Wicklungsabschnittes 80a beim Anliegen einer hohen Spannung an der Leitung 64, was während des Auftretens eines hohen Fehlerstromes geschieht. In diesem Fall ist es erwünscht, daß die Auslösewicklung 80 die Verriegelung des Schalters in drei bis vier Millisekunden aufhebt. Um diese hohe Arbeitsgeschwindigkeit zu erreichen, ist es jedoch erforderlich, den Wicklungsabschnitt 80a zu überbrücken, um hierdurch die Zeitkonstante des Stromkreises wirksam zu verringern. Da eine hohe Spannung zur Verfügung steht, ist eine ausreichende Amperewindungszahl in dem Wicklungsabschnitt 80b mit 110 Windungen zur Auslösung des Schalters vorhanden.

In Figur 3A ist ferner ein transistorisierter Spannungsregler 90 vom Typ LM340LA50 vorgesehen. An die Stifte 1 und 2 des Spannungsreglers 90 sind Kondensatoren 91 und 92 von µF bzw. 1,5 µF angeschlossen. Die geregelte Ausgangsspannung von 5 V erscheint an dem Stift 2 des Reglers 90 und wird in dem gesamten System benutzt, wo eine 5-V Stromversorgung benötigt wird. Vom Stift 1 des Reglers 90 wird eine 10-V-Spannung abgenommen.

Der 5-V-Ausgang ist ferner mit Widerständen 95 und 96 von z. B. 2,7 Kiloohm bzw. 10 Kiloohm der Schaltung für die unterschiedlichen Referenzspannungen angeschlossen. Der Verbindungspunkt der Widerstände 95 und 96 ist mit dem positiven Stift 3 des Abschnittes 95a eines Operationsverstärkers vom Typ LM358AN verbunden. Die Stifte 1 und 2 des Abschnittes 95a sind über eine Diode 96a vom Typ 1N4148 mit Widerständen 97a und 97b von 1 Kiloohm bzw. 6,2 Kiloohm verbunden. Der Verbindungspunkt der Widerstände 97a und 97b ist an den Stift 6 des Abschnittes 95b des Operationsverstärkers angeschlossen. Der Stift 7 des Abschnittes 95b ist dann über eine Diode 98 vom Typ 1N4148 und einen Widerstand 99 ( z. B. 2,7 Kiloohm) an die Auslösesignal-Leitung 86 angeschlossen. Die Eingangssystemspannung am Verbindungspunkt 50 wird einem Widerstand 51 (z. B. 1 Kiloohm) und dann an einen Widerstand 52 (z. B. 6,2 Kiloohm) und einem Kondensator 52a (0,1 µF) zugeführt.

Im folgenden wird die Schaltung gemäß der Figur 3B, die Signalaufbereitung 36 in Figur 1, der Analoginverter 37 nach Figur 1 und die gleichzeitig arbeitende Abtast- und Halteschaltung 38 nach Figur 1 beschrieben. Zunächst zeigt Figur 3B, daß das negative Signal an den Brückengleichrichtern 60, 61, 62 und 63 Präzisionswiderständen 100, 101, 102 und 103 zugeführt wird. Bei jedem dieser Widerstände handelt es sich um einen niederohmigen Widerstand von z. B. 2,5 Ohm bei 2 Watt Belastbarkeit und einer Toleranz von 1 %. Diese Widerstände können z. B. einen Kern aus Berylliumoxid besitzen und werden zur Umwandlung der durch die Brückengleichrichter 60 bis 63 erfaßten Stromsignale in ein Spannungssignal benutzt.

Das an diesen Signalwiderständen 100 bis 103 anliegende Signal wird jedoch invertiert und liegt tiefer als Nullpotential. Da der noch zu beschreibene Mikroprozessor invertierte und über Nullpotential liegende Signale benötigt, werden die von den Widerständen 100 bis 103 kommenden Signale an entsprechende Abschnitte eines Operationsverstärkers U1 angelegt, der die Signale invertiert. Der Operationsverstärker U1 kann vom Typ LM2243 sein. Zwei Widerstandsnetzwerke 110a, 110b, 110c, 110d und 111a, 111b, 111c und 111d, jeweils vom Typ 4308SIP, die 10-Kiloohmwiderstände enthalten, sind zwischen die Widerstände 100 und 103 und den Operationsverstärker U1 in der gezeigten Weise geschaltet und stellen die zum Betrieb des Operationsverstärkers U1 benötigten Vorspannungen bereit.

Die Ausgangsgrößen auf den Leitungen 115, 116, 117 und 118 entsprechen invertierten Spannungen, die in Beziehung zu den Augenblickswerten der Ströme in den Phasenleitern A, B, C und dem Neutralleiter N der Schaltung in Figur 1 stehen. Mit anderen Worten stehen diese Signale in direkter Beziehung zu den von den Stromwandlern 30, 31, 32 und 33 gewonnen Signalen. Diese Signale werden dann an eine Oderschaltung aus Dioden 112a, 112b, 112c und 112d, jeweils vom Typ 1N4148, angelegt, die an den Verbindungpunkt 50 angeschlossen sind. Die Signale werden ferner einem Vierfach-Abtastschalter U2 zugeführt, der vier gesonderte Schalter enthält, der zur Abtastung der Augenblickswerte der Signale auf den Leitungen 115, 116, 117 und 118 betätigbar ist. Der Abtastschalter U2 kann ein Bauelement vom Typ CD4066 sein.

Diese Abtastungen können gleichzeitig vorgenommen werden. Hierzu werden die Abtastschalter geschlossen, um in jeder Leitung gleichzeitig einen Abtastwert abzunehmen, und zwar geschieht dies durch die Steuerleitung 120, die von dem Stift 34 (P1-7) eines anhand der Figur 3C noch zu beschreibenden Mikroprozessors U4 ausgeht.

Wird die Leitung 120 aktiviert, so wird über die Eingangssteuerleitungen an den Stiften 12, 12, 5 und 6 des Abtast schalters U2 ein Abtastvorgang aller vier Schalter des Abtastschalters U2 veranlaßt. Die von dem Operationsverstärker U1 ausgehenden Leitungen 115, 116, 117 und 118 sind an die Eingangs- und Ausgangsstifte 1, 4, 8 und 11 des Abtastschalters U2 angeschlossen. Die Steuerleitung 120 wird so betrieben, daß die Schalter des Abtastschalters U2 alle 1500 Mikrosekunden (etwa elfmal pro Periode in einem 60 Hz-System) ein- und ausgeschaltet werden. Diese Abtastung wird 100 Perioden lang durchgeführt und ergibt 1100 gleichzeitige Abtastwerte für jede der Leitungen A, B, C und N in einem gegebenen Zeitraum von Perioden.

Die abgetasteten Signale werden dann Kondensatoren 130, 131, 132 und 133 entsprechend den Phasenleitern A, B, C und dem Neutralleiter N zugeführt. Die Kondensatoren 130 bis 133 können jeweils 1000 pF aufweisen. Jedesmal, wenn einer der Schalter des Abtastschalters U2 schließt, wird der zugehörige Kondensator 130 bis 133 aufgeladen. Entsprechende Abschnitte eines Operationsverstärkers U3 sind an die Ausgänge der Schalter des Abtastschalters U2 angeschlossen. Diese wirken als Spannungsfolger und dienen dazu, eine übermässige Entladung der Kondensatoren 130 bis 133 während der Abtastung zu verhindern.

Gegen Ende eines vollständigen Abtastvorganges steht die Nettoladung auf jedem Kondensator 130 bis 133 in Beziehung zu dem Augenblickswert des Stromes, der durch einen der Stromwandler 30 bis 33 gemessen wurde. Es ist zu beachten, daß diese Messungen gleichzeitig durchgeführt wurden, so daß die Daten nicht nur hinsichtlich eines echten Effektivwertes für jeden Leiter, sondern auch zur Berechnung eines Erdschlußfehlers ausgewertet werden können.

Wie aus der Figur 3B zu entnehmen ist, werden die Ausgangsgrößen des Spannungsfolgers U3 digitalisiert und dann dem Mikroprozessor für die Berechnung des Effektivwertes und des Erdschlußstromes zugeführt.

Im folgenden wird auf die Bauteile der Figur 3C Bezug genommen. Zunächst zeigt die Figur 3C den Haupt-Mikroprozessor U4. Vorzugsweise wird ein Mikroprozessor vom Typ 80C49NEC benutzt, in den das Programm für das System einmaskiert ist. Stattdessen kann auch ein handelsüblicher Mikroprozessor 8049NEC in Verbindung mit einem passenden EPROM benutzt werden, um ein Programm bereit zu stellen, das mit Hilfe von Schalterstellungen ausgewählt werden kann, um eine gewünschte Auslösecharakteristik zu erreichen.

Ein Kristalloszillator Y1 mit einer Frequenz vom 6 MHz ist an die Stifte 2 und 3 angeschlossen, während eine Referenzspannung über Widerstände 150, 151 und einen Kondensator 152 (10 Kiloohm, 10 Kiloohm, 0,1 µF) angelegt ist. Stift 7 ist mit Nullpotential verbunden. Die Steuerleitung 120, die den in Figur 3b gezeigten Abtastschalter U2 steuert, ist an den Stift 34 (P1-7) des Mikroprozessors U4 angeschlossen. Der Stift 31 ist über den Inverter U6 an die Leitung 160 angeschlossen. Der Ausgang des Inverters U6 wird zur Umschaltung der Referenz-Spannungschaltung benutzt, wie noch beschrieben wird.

Ein erster Umschalter US1 ist an den Stift 1 des Mikroprozessors U1 angeschlossen, und gestattet wahlweise die Anlegung des Stiftes 1 an +5 V oder Nullpotential zur Erdschlußmessung oder zur Umgehung der Erdschlußmessung. Ein zweiter Umschalter US2 am Stift 39 gestattet die Umschaltung von unverzögerter Auslösung oder Umgehung der unverzögerten Auslösung.

Ferner enthält die Figur 3c einen A/D-Wandler U5, der vorzugsweise vom Typ ADC0809 ist. Die von den Stiften 8, 14, 1 und 7 des Spannungsfolgers U3 in Figur 3B ausgehenden Leitungen sind an die Stifte 27, 28, 1 und 26 des A/D-Wandlers U5 in Figur 3C angeschlossen. An den Stiften DB0 bis DB7 steht ein dem an den genannten Eingangsstiften anliegenden Analogwert entsprechender Digitalwert zur Verfügung. An dem Stift 7 des A/D-Wandlers U5 wird ein Endsignal EOC ("Ende der Umwandlung") abgegeben, das über einen Abschnitt des Inverters U6 (ein 6fach-Inverter vom Typ 74HC04) an den Stift 6 des Mikroprozessors U4 angelegt wird. Das Startsignal von U4 am Stift 6 wird von dem Stift 29 des Mikroprozessors U4 abgeleitet. Alle weiteren Stiftverbindungen zwischen dem Mikroprozessor U4 und dem A/D-Wandler U5 sind in der dargestellten Weise vorgenommen.

Ferner ist ein für drei bis acht Leitungen geeigneter Decoder U9 z. B. vom Typ 74HC138 vorgesehen. Es sind auch zwei oktale Puffer für drei Zustände U10 und U11 vom Typ 74HC244 ("Tristate buffer") vorgesehen.

Als weitere Elemente enthält die Schaltung in der Figur 3D gezeigte vier BCD-Schalter S1, S2, S3 und S4 mit zehn Stellungen, z. B. vom Typ 230102GBBCD, die zur Einstellung der Erdschluß-Auslöseverzögerung, Erdschlußerfassung, der unverzögerten Auslösung und Nennstromeinstellung dienen. Widerstandsnetzwerke RN3, RN4, RN5 und RN6 sind in den Verbindungen zwischen den Schaltern 51 bis 54 und Puffern U10 und U11 vorgesehen, so daß ein offener Schalter das Signal herabzieht.

In der Figur 3C ist ferner eine Schaltung zur Bereitstellung eines thermischen Gedächtnisses dargestellt, das Thermistoren NTC1, NTC2 und NTC3, z. B. vom Typ 05DC103J-EC enthält. Diese sind vorzugsweise auf den Leitern innerhalb des Leistungsschalters angebracht, die als Primärwicklungen der Stromwandler 30, 31 und 32 dienen. Die Thermistoren sind in Reihe mit Widerständen 220, 221 und 222 von jeweils 30 Kiloohm geschaltet. Dem thermischen Zustand des Leistungsschalters entsprechende Singale werden dann dem A/D-Wandler U5 zugeführt, und ihr digitaler Wert wird dem Mikroprozessor U4 eingegeben, um in geeigneter Weise die Auslösecharakteristik des Schalters entsprechend seiner thermischen Vorgeschichte zu verändern.

Eine Schaltung zur Umschaltung der Referenzspannung ist gleichfalls in der Figur 3D gezeigt. Diese Schaltung besteht aus einem Spannungsteiler mit Widerständen 260 und 261 (6 bzw. 14 Kiloohm) die an die Ausgangsleitung 160 angeschlossen sind. Der Verbindungspunkt der Widerstände 260 und 261 ist an den Stift 3 eines Operationsverstärkers U7 angelegt (ein Doppeloperationsverstärker vom Typ LM358AN). Die Widerstände 265 und 266 (12 Kiloohm bzw. 1,5 Kiloohm) eines zweiten Spannungsteilers sind gleichfalls an +5 V angelegt und ihr Verbindungspunkt ist an den Stift 5 des entsprechenden Abschnittes des Doppeloperationsverstärkers U7 angelegt. Die Ausgangsstifte 4 und 7 des Operationsverstärkers U7 sind mit Dioden 270 und 271 (jeweils vom Typ 1N4148) verbunden, deren Verbindungspunkt über eine Ausgangsleitung 272 an den Stift 12 des A/D-Wandlers U5 (Figur 3C) angeschlossen ist.

Das Potential am Verbindungspunkt der Widerstände 260 und 261 beträgt 3,5 V, und das Potential am Verbindungspunkt der Widerstände 265 und 266 beträgt 0,556 V. Beträgt die Spannung auf der Leitung 160 des Mikroprozessors U4 5 V, so beträgt der Ausgang auf der Leitung 272 über die Diode 270 3,5 V. Fordert jedoch der Mikroprozessor U4 eine Änderung der Referenzspannung an, so ist die Spannung auf der Leitung 262 0 V und der Ausgang auf der Leitung 272 beträgt dann über die Diode 271 0,556 V.

Über die gesamte Schaltung nach den Figuren 3a, 3b und 3c ist eine Anzahl von Prüfpunkten verteilt. Diese insgesamt 14 Prüfpunkte sind mit TP1 bis TP14 bezeichnet und haben folgende Bedeutung:

TP1 (-) Phasenleiter A

TP2 (-) Phasenleiter B

TP3 (-) Phasenleiter C

TP4 (-) Neutralleiter N

TP5 (-) Auslösemagnet

TP6 Prüfpunkt

TP7 Prüfpunkt

TP8 Prüfpunkt

TP9 Index-Stift

TP10 (+) Auslösemagnet

TP11 (+) Neutralleiter

TP12 (+) Phasenleiter C

TP13 (+) Phasenleiter B

TP14 (+) Phasenleiter A

Im folgenden kann die Wirkungsweise der in den Figuren 3A, 3B, 3C und 3D gezeigten Schaltung beschrieben werden, wobei insbesondere die Verarbeitung der von den Kondensatoren 130, 131, 132 und 133 abgeleiteten Signale zu erläutern ist. Das in den Figuren 2A und 2B gezeigte Flußdiagramm ist auf die Figuren 3A, 3B, 3C und 3D anwendbar.

Um das System in Betrieb zu nehmen, wird der Leistungsschalter 20 (Figur 1) eingeschaltet, wobei jedoch ein Betrieb des Mikroprozessors U4 (Figur 3C) solange verhindert wird, bis die Referenzsignalspannungen bereitstehen. Sobald dies der Fall ist, liest der Mikroprozessor U4 die Stellung der Schalter S1, S2, S3 und S4 (Figur 3D), die der Auslöseverzögerung für Erdschluß, dem Einstellwert für Erdschlußmessung, der unverzögerten Auslösung und der Dauerstromein stromeinstellung entsprechen. Diese Signale werden von den Stiften 1, 3, 4 und 6 der Schalter S1, S2, S3 und S4 an die Eingangsstifte der Puffer U10 und U11 (Figur 3D) angelegt. Die Ausgänge der Puffer U10 und U11 werden sequentiell an den Stiften 12, 13, 14 und 15 des Mikroprozessors U4 (Figur 3C) gelesen und die gewünschte Auslösecharakteristik der Auslöseeinheit wird dementsprechend gesetzt. In ähnlicher Weise werden die Ausgänge der Thermistoren NTC1, NTC2 und NTC3 (Figur 3C) in die Stifte 4, 3 und 2 des A/D-Wandlers U5 eingelesen, der die analogen Eingangsgrößen der Thermistoren in ein digitales Signal an den Ausgangsstiften 17, 14, 15, 8, 18, 19, 20 und 21 des A/D-Wandlers U5 umwandelt und an die entsprechende Stifte des Mikroprozessors U4 anlegt. Der Mikroprozessor U4 benutzt dann diese Information über die thermische Vorgeschichte, um die Auslösepunkte des Leistungsschalters 20 (Figur 1) relativ zu den Auslösepunkten im kalten Zustand des Leistungsschalters zu verändern.

Es sei nun angenommen, daß die Stromversorgung in Betrieb ist und der Leistungsschalter 20 erfolgreich wieder eingeschaltet wurde und eingeschaltet bleibt. Hiervon ausgehend sei angenommen, daß ein Fehler auf der Phase A des Leistungsschalters auftritt. Dann fließt ein relativ hoher Strom durch den Brückengleichrichter 60 in Figur 3B durch den Transistorschalter 65 und kehrt durch den anderen Anschluß des Gleichrichters 60 über Masse und den Widerstand 100 zurück. Die an dem Widerstand 100 anliegende Spannung wird durch den Operationsverstärker U1 mit der Verstärkung 1 invertiert und über die Diode 112a angelegt.

Ist das Signal so hoch, daß eine unverzögerte Auslösung erforderlich ist, so fließt der Fehlerstrom durch den Widerstand 150 zum Stift 5 des Operationsverstärkers 95b und veranlaßt an dem Stift 77 eine zur Zündung des Thyristors 82 ausreichende Ausgangsgröße, wodurch die magnetische Ver klinkungseinrichtung (Auslöser 21 in Figur 1) betätigt wird. Falls jedoch das an der Diode 112a abgegebene Signal zur Betätigung des Operationsverstärkers 95b nicht ausreicht, erscheint das Ausgangssignal am Stift 1 des Schalters SW-A des Abtastschalters U2. Es ist zu beachten, daß alle Schalter des Abtastschalters U2 gleichzeitig aufgrund eines von dem Stift 31 des Mikroprozessors U4 auf die Leitung 120 gegebenen Steuersignals öffnen und schließen.

Wenn die Schalter U2 (Figur 3B) geschlossen sind, laden sich die Kondensatoren 130 bis 133 auf Werte auf, die in Beziehung zu den von den entsprechenden Abschnitten des Operationsverstärkers U1 kommenden Signalen stehen. Da ein Fehler in der Phase A bestand, ist der Kondensator 130 höher als die Kondensatoren 131, 132 und 133 aufgeladen. Wenn die Leitung 120 die Öffnung aller Schalter des Abtastschalters U2 veranlaßt, gelangt das auf den Kondensatoren 130 bis 133 befindliche Signal zu dem durch den Operationsverstärkerabschnitt U3 gebildeten Spannungsfolger. Die Verstärkung des Operationsverstärkers U3 beträgt 1, um die Stromentnahme aus den Kondensatoren 130 bis 133 soweit wie möglich zu begrenzen.

Der Analog-Digitalwandler U5 kann nur eine Umwandlung gleichzeitig durchführen. Der Mikroprozessor U4 wählt aus, welche der Phasen und gegebenenfalls der Neutralleiter umgeformt wird, z. B. in der Reihenfolge, Phase A, Phase B, Phase C und Neutralleiter.

Wenn z. B. die Digitalumwandlung für die Phase A durchgeführt ist, liest der Mikroprozessor von . dem A/D-Wandler U5 einen 8-Bit-Wert aus, der der Spannung auf dem Kondensator 130 entspricht. Nacheinander liest der Mikroprozessor die von dem Operationsverstärker U3 gleichzeitig eingegebenen Werte von dem A/D-Wandler U5 und speichert diese. Anschliessend addiert der Mikroprozessor U4 unter dem Einfluß des Programms alle vier von den Phasen A, B, C und dem Neutralleiter abgenommenen Werte und berechnet den Erdschlußstrom, sofern ein solcher besteht. Wird ein Erdschlußstrom jenseits einer gegebenen Größe gemessen, gibt der Mikroprozessor zur Zündung des Thyristors ein Signal ab. Es ist zu beachten, daß der Mikroprozessor bei der Durchführung der Analyse die einzelnen Werte prüft, um für die Kurzzeitauslösung den Durchschnittsspitzenwert zu bestimmen. Der Mikroprozessor U4 benutzt ferner die gemessenen Werte als einzelne Abtastwerte zur Berechnung echter Effektivwerte für die Langzeitauslösefunktion. Es werden 256 Abtastwerte zur Erzeugung eines einzelnen Effektivwertes benötigt. Andererseits müssen mehrere Effektivwerte gemessen werden, bevor ein Auslösevorgang eingeleitet werden kann. Die Berechnung eines einzelnen Effektivwertes nach dem beschriebenen System beansprucht etwa 1,2 sec.

Sofern der Mikroprozessor die Entscheidung zur Zündung des Thyristors 82 getroffen hat, wird an dem Stift 30 (P1-3) ein Auslösesignal abgegeben, das über U6 an die Steuerelektrode des Thyristors 82 geleitet wird.

Bei der ersten Inbetriebsetzung der Schaltung wird ein Startumwandlungsignal benötigt. Dieses Startsignal wird von dem Stift 29 des Mikroprozessors U4 entnommen. Ein Umwandlungsendsignal (EOC) wird von dem A/D-Wandler U5 an dem Stift 7 abgegeben, das die Erzeugung eines neuen Startsignals am Stift 29 des Mikroprozessors U4 zum Starten eines neuen Umwandlungssignals veranlaßt.

Das von dem Operationsverstärker U7 abgegebene Spannungsreferenzsignal wird über die Leitung 272 an den Stift 12 des A/D-Wandlers U5 angelegt. Der Mikroprozessor U4 entscheidet, ob diese Referenzspannung hoch oder niedrig sein soll, in Abhängigkeit von dem während des Bestehens eines Fehlerstromes gemessenen Strom. Auf diese Weise gibt der Mikroprozessor U4 an dem Stift 30 ein passendes Signal über den Inverter U6 und die Leitung 160 (Figur 3C) ab, um die Referenzspannung der gewünschten Weise umzuschalten, wodurch eine Umschaltung des Maßstabsfaktors hervorgerufen wird, wie bereits beschrieben wurde. Die an die Stifte 5 und 6 des Mikroprozessors U4 angeschlossene Schaltung enthält Widerstände und Kondensatoren, die die erforderliche Rückstellfunktion (reset) bereitstellen. Auf diese Weise wird die Rückstellung für etwa 1 Millisekunde gehalten, bis die Stromversorgung betriebsbereit ist, wenn der Leistungsschalter beim ersten Mal eingeschaltet wird und die Stromversorgungseinrichtung ihre normalen Ausgangswerte noch nicht erreicht hat.

Der Betrieb des Mikroprozessors steht unter der Steuerung eines geeigneten Programms entsprechend dem Flußdiagramm gemäß den Figuren 2A und 2B.

Obwohl die vorliegende Erfindung in Verbindung mit einem bevorzugten Ausführungsbeispiel beschrieben worden ist, erkennt der Fachmann die Möglichkeit zahlreicher Abwandlungen und Veränderungen. Alle solchen Veränderungen,Abwandlungen, die nicht vom Sinn der Erfindung abweichen, sollen durch die Ansprüche erfaßt werden.

## Ansprüche

1. Einen Mikroprozessor enthaltende Auslöseeinheit für einen Leistungsschalter (20) mit wenigstens einem an eine Leitung (A, B, C) eines Wechselstromkreises angeschlossenen Stromwandler (30, 31, 32), wobei die Leitung mit einem entsprechenden Pol des Leistungsschalters (20) verbunden ist; mit einem elektromechanischen Auslösemechanismus (21) zur Öffnung der Pole des Leistungsschalters (20); mit einem an die Stromwandler angeschlossenen Signalumformungsmittel (36) zur Umwandlung des Ausgangsstromes des Stromwandlers (30, 31, 32) in ein entsprechendes Spannungssignal, **gekennzeichnet durch eine** Abtast- und Halteschaltung (38) zur wiederholten

Abtastung und Haltung analoger Werte des Spannungssignales für eine vorbestimmte Anzahl von Abtastungen; an die Abtast- und Halteschaltung (38) angeschlossene Mittel zur Analog/Digitalumwandlung (39) zur Umwandlung des in der Abtast- und Halteschaltung (38) erzeugten Analogwertes nach Durchführung der vorbestimmten Anzahl von Abtastungen in einen entsprechenden Digitalwert; eine mit dem Mittel zur Analog/Digitalumwandlung verbundene Mikrocomputereinrichtung (41) zur Berechnung eines wahren Effektivwertes des Stromes auf der Leitung; und eine zwischen die Mikrocomputereinrichtung (41) und den Auslösemechanismus (21) geschaltete Ausgangsschaltung zur Betätigung des Auslösemechanismus (21) aufgrund eines zuvor festgelegten Wertes des Leitungsstromes.

2. Auslöseeinheit nach Anspruch 1, **dadurch gekennzeichnet**, daß die Abtastzeit kurz im Vergleich zur Zeitdauer einer Periode des Wechselstromes ist.

3. Auslöseeinheit nach Anspruch 1, **dadurch gekennzeichnet**, daß ein Meßzyklus für einen Effektivwert eines Stromes etwa 1000 Abtastungen im Abstand von etwa 1500 μs während etwa 100 Perioden des Stromes umfaßt.

4. Auslöseeinheit nach Anspruch 1, **dadurch gekennzeichnet**, daß bei einem mehrphasigen Wechselstromnetz für jeden Leiter (A, B, C, N) ein Stromwandler (30, 31, 32, 33) und eine Abtast- und Halteschaltung (U2) vorgesehen ist, wobei die von jedem Leiter (A, B, C, N) abgeleiteten Spannungssignale gleichzeitig abgetastet werden.

5. Auslöseeinheit nach Anspruch 4, **gekennzeichnet durch** elektronische Schalter (U2) und Kondensatoren (130, 131, 132, 133) sowie Steuerungsmittel (U4) zur Abtastung der Leitungen (A, B, C, N), welche die Schalterstromkreise (SW-A, SW-B, SW-C, SW-D) für jede der Leitungen gleichzeitig schließen und den zugehörigen Kondensatoren eine Ladung hinzufügen mit einem Wert, der der Amplitude des Spannungssignals im Augenblick der Abtastung entspricht.

6. Auslöseeinheit nach Anspruch 5, **dadurch gekennzeichnet**, daß die Steuerungsmittel (U4) eine gleichzeitige Abtastung gleichzeitig der Ausgangsgrößen jedes der Stromwandler (30, 31, 32, 33) annähernd elfmal in jeder Periode eines 60-Hz-Netzes veranlassen.

7. Auslöseeinheit nach Anspruch 5, **dadurch gekennzeichnet**, daß als elektronischer Schalter ein Vierfach-Abtastschalter (U2) vorgesehen ist, der die Spannungssignale aufnimmt und der vier gesondert ansteuerbare Schaltelemente (SW-A, SW-B, SW-C, SW-D) aufweist, die zur Abtastung von vier Spannungen betätigbar sind.

8. Auslöseeinheit nach Anspruch 4 oder einem der folgenden Ansprüche, **dadurch gekennzeichnet**, daß der in einem Neutralleiter (N) fließende Strom in gleicher Weise der Erfassung, Umformung und Abtastung wie die Ströme in den Phasenleitern (A, B, C) unterworfen ist und daß die Mikrocomputereinrichtung (41) Mittel zur Berechnung eines Erdschlußstromes aus den gleichzeitigen Abtastwerten der Ströme in den Leitern (A, B, C, N) des Netzes umfaßt.

9. Auslöseeinheit nach Anspruch 1, **dadurch gekennzeichnet**, daß an die Mikrocomputereinrichtung (41) eine Schaltung (35a) zur selbsttätigen Änderung des Maßstabsfaktors angeschlossen ist, um einen gegebenen Strombereich bezogen auf Einheiten von Ampere pro Bit des Mikrocomputers in einen ersten kleinen und einen zweiten größeren Bereich zu unterteilen.

10. Auslöseeinheit nach Anspruch 9, wobei der Maßstabsfaktor des Stromes bei Strömen oberhalb des 1,5fachen Nennstromes dynamisch geschaltet wird, um jeweils dieselbe Mindestgenauigkeit zu erreichen.

11. Auslöseeinheit nach Anspruch 9, wobei die Schaltung eine Referenzspannung ($V_{ref}$) erzeugt, die steuerbar zwischen wenigstens zwei Werten umschaltbar ist, um dadurch die selbsttätige Änderung des Maßstabsfaktors zu bewirken.

12. Auslöseeinheit nach Anspruch 9, **dadurch gekennzeichnet**, daß ein erster Operationsverstärker (U7; 3, 4, 5) mit einem Eingang für ein variables Spannungssignal und einem Ausgang sowie ein zweiter Operationsverstärker (U7; 6, 7 8) mit einem Festspannungseingang und einem mit dem Ausgang des ersten Verstärkers verbundenen Ausgang vorgesehen sind, derart, daß sich die Spannung am Verbindungspunkt der Ausgänge aufgrund des variablen Spannungssignal ändert. (Figur 3D)

13. Auslöseeinheit nach Anspruch 12, **dadurch gekennzeichnet**, daß eine erste, an den Ausgang des ersten Verstärkers (U7; 3, 4, 5) angeschlossene Diode (270) und eine zweite an den Ausgang des zweiten Verstärkers (U7; 6, 7, ()) und die erste Diode angeschlossene Diode (271) vorgesehen sind, derart, daß sich die Spannung am Verbindungspunkt der Dioden (270, 721) aufgrund des variablen Spannungssignals ändert. (Figur 3D)

14. Auslöseeinheit nach, Anspruch 12, **dadurch gekennzeichnet**, daß an den Eingang des zweiten Verstärkers (U7; 6, 7, 8) ein Spannungsteilernetzwerk (265, 266) angeschlossen ist, das dem zweiten Verstärker eine zuvor gewählte Spannung zuführt.

15. Auslöseeinheit nach Anspruch 14, wobei das Spannungsteilernetzwerk (265, 266) die Versorgungsspannung auf etwa 0,556 V verringert. (Figur 3D)

16. Auslöseeinheit nach Anspruch 13, **dadurch gekennzeichnet**, daß die Ausgangsspannung des zweiten Verstärkers (U7; 6, 7, 8) an der zweiten Diode (271) etwa 0,556 Volt beträgt. (Figur 3D)

17. Auslöseeinheit nach Anspruch 13, **dadurch gekennzeichnet**, daß an den Eingang des ersten Verstärkers (U7; 3, 4, 5) ein Spannungsteilernetzwerk (260, 261) angeschlossen ist, das eine variable Spannung erhält und diese Spannung teilt. (Figur 3D)

18. Auslöseeinheit nach Anspruch 17, **dadurch gekennzeichnet**, daß die Eingangsspannung etwa 3,5 Volt beträgt, wenn die variable Spannung etwa 5 Volt beträgt. (Figur 3D)

19. Auslöseeinheit nach Anspruch 13, **dadurch gekennzeichnet**, daß die Spannung am Verbindungspunkt der Ausgänge etwa 3,5 Volt bei einem variablen Spannungssignal von 5 Volt beträgt und etwa 0,556 V bei einem variablen Spannungssignal von 0 Volt aufweist.

20. Auslöseeinheit nach Anspruch 1, **dadurch gekennzeichnet**, daß der Leistungsschalter (20) eine als thermisches Gedächtnis wirkende Einrichtung (50) enthält, die eine zu der in einem gegebenen Zeitpunkt in dem Leistungsschalter (20) vorhandenen thermischen Energie in Beziehung stehende Ausgangsgröße erzeugt und daß Schaltungsteile zur Zuführung der Ausgangsgröße der thermischen Gedächtniseinrichtung (50) nach Umwandlung in einen digitalen Wert mittels der Mittel zur Analog/Digitalumwandlung (39) zu der Mikrocomputereinrichtung (41) vorgesehen sind, um die Auslösefunktion der Auslöseeinheit nach dem Schließen des Leistungsschalters (20) nach Maßgabe der thermischen Vorgeschichte zu beeinflussen. (Figur 1)

21. Auslöseeinheit nach Anspruch 20, **dadurch gekennzeichnet**, daß an einer Stromschiene jedes Poles des Leistungsschalters für eine Phase des Netzes (A, B, C) ein Thermistor (NTC1, NTC2, NTC3) angebracht ist. (Figur 3C)

22. Auslöseeinheit nach Anspruch 20, dadurch gekennzeichnet, daß die Thermistoren (NTC1, NTC2, NTC3) an den als Primärwicklungen der Stromwandler (30, 31, 32) dienenden Leitern befestigt sind. (Figur 1 und 3C)

23. Auslöseeinheit nach Anspruch 21, dadurch gekennzeichnet, daß die Thermistoren (NTC1, NTC2, NTC3) einen Temperaturkoeffizienten derart aufweisen, daß ihr Widerstand in Beziehung zu der in dem Leistungsschalter (20) vorhandenen thermischen Energie steht. (Figur 1 und 3C)

24. Auslöseeinheit nach Anspruch 20, dadurch gekennzeichnet, daß die thermische Gedächtniseinrichtung (50) eine kapazitive Speichereinrichtung aufweist, in der ein Kondensator auf einen dem Energieumsatz innerhalb des Leistungsschalters (20) entsprechenden Ladungswert aufladbar ist. (Figur 1)

25. Auslöseeinheit nach Anspruch 24, dadurch gekennzeichnet, daß innerhalb der Mittel zur Analog/Digitalumwandlung (39) ein Kanal zur Umwandlung des Ladungswertes des Kondensators in einen Digitalwert vorgesehen ist und daß dieser Digitalwert der Mikrocomputereinrichtung (41) zur Beeinflussung des Auslöseverhaltens zuführbar ist. (Figur 1)

26. Auslöseeinheit nach Anspruch 24, dadurch gekennzeichnet, daß Schaltungsmittel zur Entladung des Kondensators entsprechend der Abkühlung des Leistungsschalters (20) nach seiner Abschaltung oder Auslösung vorgesehen sind.

27. Auslöseeinheit nach Anspruch 1, dadurch gekennzeichnet, daß der Auslösemechanismus eine elektromagnetische Verklinkungseinrichtung mit einer Arbeitswicklung (80) und einen Halbleiterschalter (82) mit einer Steuerelektrode (82G) umfaßt, wobei die Auslösewicklung (80) mit dem Halbleiterschalter (82) in Reihe geschaltet ist und der Steuerelektrode (82G) aufgrund einer Ausgangsgröße der Mikrocomputereinrichtung (U4; Figur 3C) ein Steuersignal zur Leitendschaltung des Halbleiterschalters (82) zuführbar ist und wobei ferner die Auslösewicklung (80) aus einem Abschnitt (80a) mit hoher Windungszahl und hohem Widerstand und einem Abschnitt (80b) mit niedriger Windungszahl und niedrigem Widerstand besteht und zwischen den Verbindungspunkt der in Reihe geschalteten Wicklungsabschnitte (80a, 80b) und den Halbleiterschalter (82) ein Nebenschlußschalter (80c) zur Überbrückung des Wicklungsabschnittes (80a) mit hoher Windungszahl beim Anliegen einer einen festgelegten Wert überschreitenden Spannung vorgesehen ist. (Figur 3A)

28. Auslöseeinheit nachm Anspruch 27, dadurch gekennzeichnet, daß der Wicklungsabschnitt mit geringem Widerstand etwa 110 Windungen vom US-Drahtmaß 33 (0,18 mm) mit etwa 4,4 Ohm und der Wicklungsabschnitt mit hohem Widerstand etwa 6650 Windungen vom US-Drahtmaß 40 (0,08 mm) mit etwa 1150 Ohm aufweist.

0 179 017

FIG 1

IPH.MAX ?

IPH.MAX –
WEITERE
IPH U. IN

ERGEBNIS
↓
SPEICHER

BERECHNG.
ΔIØ
1/4 PER.

ΔIØ < ΔI ? — JA

NEIN

BERECHNG.
VERZÖGRG.

LÖSCHEN
AUSL.-FLGS.

VERZ. > ZÄ. ? — JA

NEIN

ZEITKREIS
LAD./START

SETZEN
AUSL.-FLGS.

①

JE PHASE:
$I^2$, $\Sigma I^2$,
ZÄHLER ↑

ZÄHLER <
256 ?

EFFEKTIVW.
= EFFW. ÷ 256

VREF ↑ ? — JA

NEIN

PARAMTR. ↑     PARAMTR. ↓

EFF.W. ≤
115% ? — JA

NEIN

$\Sigma I \geq \Sigma I >$
$+ \Sigma I$ –
ABKÜHLG.

$\Sigma I \geq \Sigma I >$
– ABKÜHLG.

SETZEN
AUSL.-FLGS.

LÖSCHEN
AUSL.-FLGS.
$\Sigma I > = 0$

$\Sigma (I >) <$
$\times$ EFF ?

⑤

AUSLÖSUNG

⑥

ENDE

START

INITIALI-
SIERUNG

LESEN
THERM. G.

VOREINST.
IEFF

LESEN
KONFIG. SCH

SETZEN
AUSL.-PARM.

SETZEN
PORTS. STAT.

START
A/D-W.

BERECHNG.
WIRKS.
ΔI ? — JA

NEIN

①

BERECHNG.
WIRKS.
IEFF ?

VREF ↑ ? — JA

NEIN

③

④

## FIG 2A

**INTERRUPT ROUTINE**

STOP ZEIGER
$\Sigma\hat{I} = \Sigma\hat{I}$
– ABKÜHLUNG

EINGABE
A/D–W.
ABTASTW.

SPEICHERN
BEIM ZEIGER
ABTASTWERT

BERECHNG.
$\emptyset\,\hat{I}$ ÜBER
¼ PERIODE

START
NÄCHST. Z.
A/D – W.

? VREF↓ → JA → ②

NEIN

? $\hat{I}\emptyset < \hat{I}$ M. → JA

NEIN

$\Sigma\hat{I} = \Sigma\hat{I} + \hat{I}\emptyset$

? $\Sigma\hat{I} >$ CONST. → JA → SETZEN AUSLÖSE-FL. → ⑥

NEIN → ②

---

②

? $\hat{I}\emptyset < I>x$ → JA

UMSCHALTEN VREF↑

? ZEIGER ≠ 3 → JA

NEIN

SPEICHERN Ieff–ABTAST.

FREIGABE Ieff BERECHNG.

? $I\emptyset = 0$ → JA

NEIN

SPEICHERN ΔI–ABT.–W.

FREIGABE ΔI BERECHNG.

ENDE INTERRUPT

---

**ZEITKREIS INTERRUPT**

ZEITKREIS LAD./START

? FREIGABE ΔI–AUS.

COUNTDOWN

? ZÄHLERST. >0

⑤

ENDE INTERRUPT

---

③

? ALLE FLAGS FREI → NEIN

JA

UMSCHALTEN VREF↓

④

**FIG 2B**

FIG 3A

ARBEITSSTROM-AUSLÖSER  81

AUSLÖSE-WICKLUNG  80

TP 10

TP 5

TRANSISTOR-SCHALTER (DARLINGTON)

+10 V

+5 V

0 179 017

FIG 3B

(FIG 3C)

FIG 3C

0 179 017

FIG 3D